(19) Europäisches Patentamt
European Patent Office
Office européen des brevets

(11) **EP 1 820 701 B1**

(12) **EUROPÄISCHE PATENTSCHRIFT**

(45) Veröffentlichungstag und Bekanntmachung des Hinweises auf die Patenterteilung:
**01.04.2009   Patentblatt 2009/14**

(51) Int Cl.:
***B60R 21/0132*** *(2006.01)*

(21) Anmeldenummer: **07100060.8**

(22) Anmeldetag: **03.01.2007**

(54) **Vorrichtung zur Ansteuerung von Überrollschutzmitteln in einem Fahrzeug**

Device for controlling rollover protection devices in a vehicle

Dispositif destiné à la commande de moyens de protection contre les tonneaux d'un véhicule

(84) Benannte Vertragsstaaten:
**DE ES FR GB IT**

(30) Priorität: **21.02.2006   DE 102006007987**

(43) Veröffentlichungstag der Anmeldung:
**22.08.2007   Patentblatt 2007/34**

(73) Patentinhaber: **ROBERT BOSCH GMBH**
**70442 Stuttgart (DE)**

(72) Erfinder: **Lich, Thomas**
**71409, Schwaikheim (DE)**

(56) Entgegenhaltungen:
**EP-A- 1 566 312         WO-A-03/031236**
**WO-A-20/05123462     US-A1- 2003 158 633**
**US-A1- 2004 128 060**

**Beschreibung**

Stand der Technik

Die Erfindung betrifft eine Vorrichtung zur Ansteuerung von Überrollschutzmitteln in einem Fahrzeug nach der Gattung des unabhängigen Patentanspruchs.

Zukünftig verknüpfen Sicherheitssysteme in Fahrzeugen aktive und passive Sicherheit miteinander. Aus DE 102 50 732 B3 ist eine Steuervorrichtung zur Ansteuerung eines Insassen- oder Partnerschutzsystems bekannt, wobei Fahrdynamikgrößen verwendet werden. Die Steuervorrichtung ermittelt in Abhängigkeit der Fahrdynamikgrößen ein sicherheitskritisches Fahrverhalten des Fahrzeugs, und somit können präventiv reversible Insassenschutzsysteme aktiviert werden. Aus US 2004/0183281 A1 ist es bekannt, eine vorausschauende Sensorik in Kombination mit einer lateralen Geschwindigkeit zu verknüpfen, um eine korrigierte Relativgeschwindigkeit beim seitlichen Rutschen zu berechnen und dieses Ergebnis zur Rückhaltemittelaktivierung zu berücksichtigen. Aus US 2005/0017487 A1 ist ein Verfahren zur Auslösung eines Seitenschutzmittels bei lateraler Bewegung des Fahrzeugs in Kombination mit anderen Sensoren bekannt. Die Erfassung der lateralen Geschwindigkeit basiert auf einem Signal eines Sensors, der die Lateralbewegung sensorisch erfasst. Aus DE 10 2004 007 800 ist ein Verfahren bekannt, dass auf Basis der Lateralgeschwindigkeit eine Auslöseentscheidung für seitliche Schutzmittel bildet.

Allen Verfahren ist es gemeinsam, dass eine zusätzliche Plausibilisierung über vorhandene Crash-Sensoriken erfolgt, die dann zu einem frühzeitigeren Auslösen der Rückhaltemittel führt. Ebenso wie bei einem drohenden Überrollvorgang wird hier der Wankratensensor als auslösende Einheit verwendet, um den Wankwinkel zu ermitteln, der dann als Auslösekriterium für die Rückhaltemittel bei einem Überrollvorgang zündet. Diese sind im Wesentlichen bei Limousinen Curtain- und/oder Seitenairbags und/oder Gurtstraffer. Mit der Lateralgeschwindigkeit kann eine Abschätzung durchgeführt werden, wie viel Energie in einen Überrollvorgang gebracht wird und welche theoretische Wankrate zu erwarten ist. Die tatsächliche Wankrate ermittelt der Wankratensensor und bei entsprechender Überschneidung erfolgt die Aktivierung der Rückhaltemittel.. Eine Plausibilisierung erfolgt hier über eine vorhandene Beschleunigungssensorik in Fahrzeugquer- und Fahrzeugvertikalrichtung.

Eine andere Art der Überrollschutzmittel sind so genannte Überrollbügel, die nur bei Cabrios Einsatz finden, da hier die fehlende Knautschzone durch den Bügel bei einem Überrollvorgang überbrückt werden soll. Derartige Überrollbügel sind meist reversibel ausgelegt, sodass sie sich bei einer potentiellen Fehlaktivierung einfach wieder in den Ausgangszustand sich versetzen lassen. Eine andere Art der Ausprägung sind ausfahrbare Kopfstützen, welche durch eine vorgespannte Feder ausfahren, und es sind auch so genannte Rollover-Bars oder Sticks möglich, die hinter den Kopfstützen nach oben ausgefahren werden.

Kommt es nun wie bei einer Limousine zu einem seitlichen Abdriften in den Seitenstreifen, würde die vorhandene Sensorik mittels der Lateralgeschwindigkeit eine frühzeitige Auslösung kurz nach dem Eintreten in den Grünstreifen durchführen und der Überrollbügel würde hierbei gezündet werden. Nachteil bei diesem Verfahren ist, dass eine notwendige Crash-Sensorik vorhanden sein muss, die diesen Vorgang erfasst und entsprechend wie oben beschrieben plausibilisiert. Erst danach kommt es zum Auslösen des Überrollbügels. Bereits heute wird die Lateralgeschwindigkeit als Plausibilisierungssignal verwendet, z. B. bei einem Pfahl-Crash. Die eigentliche Auslösung erfolgt über eine vorhandene Druck- oder Be-schleunigungssensorik, die einen seitlichen Anprall ermittelt. Die Plausibilisierung erfolgt wie gesagt über die Lateralgeschwindigkeit. Es wird hierzu ebenfalls eine vorhandene Crash-Sensorik verwendet. Eine Aktivierung von reversiblen Gurtstraffern in Abhängigkeit von einem Schwimmwinkel oder der Lateralgeschwindigkeit ist ebenfalls eine Möglichkeit, vorwiegend die Lateralgeschwindigkeit einzusetzen.

Aus WO 03/031236 A1 ist ein Verfahren zur Bestimmung einer Auslöseentscheidung für Rückhaltemittel in einem Fahrzeug bekannt. Dabei wird diese Auslöseentscheidung in Abhängigkeit von einem Schwimmwinkel, einer Fahrzeugquergeschwindigkeit und einem Fahrzeugkippwinkel bestimmt. Der Fahrzeugkippwinkel wird durch eine Fahrzeugquerbeschleunigung und/oder eine Fahrzeugquergeschwindigkeit charakterisiert. Zusätzlich kann noch eine Insassenerkennung verwendet werden.

Offenbarung der Erfindung

Die erfindungsgemäße Vorrichtung zur Ansteuerung von Überrollbügeln in einem Fahrzeug hat demgegenüber den Vorteil, dass das Überrollschutzmittel hier in Abhängigkeit von der Lateralgeschwindigkeit und/oder eines Schwimmwinkels angesteuert wird, ohne eine vorhandene Crash-Sensorik wie z. B. ein Wankratensensor oder einen Vertikalbeschleunigungssensor zu verwenden. Durch die Umsetzung der Erfindung ergeben sich folgende Vorteile:

a) Die Zeit vor einer drohenden Kollision, welcher ein Schleudervorgang vorausgeht kann sinnvoll genutzt werden, um im Vorfeld den Überrollbügel auszufahren, sodass, falls es zu einer Kollision kommt, der Überrollbügel bereits positioniert ist.

b) Erfolgt ein seitlicher Anprall an ein Hindernis, so schützt der Überrollbügel vor dem Eindringen von Objekten in das Cabrio. Dadurch wird zusätzlich der Schutzraum der hinteren Passagiere vergrößert und biete schon im Vorfeld Schutz.

c) Bei einem drohenden Überrollvorgang ist bereits der Überrollbügel in Position und es besteht nicht mehr die Gefahr, dass dieser nicht mehr rechtzeitig in Position gebracht werden kann. Zusätzlich lässt sich die Energie im Vorfeld bereits verwenden, sodass andere Hardwarekomponenten eingesetzt werden können.

d) Es besteht ein prinzipieller Mehrnutzen von bestehender Sensorinformation aus einem Fahrdynamikregelsystem. Da die Lateralgeschwindigkeit beispielsweise mittels ESP-Sensorinformation berechnet werden kann, besteht die Möglichkeit, die Auslösung über ein ESP-Steuergerät vorzunehmen, sodass eine Buslast reduziert werden kann.

Der Erfindung liegt der Gedanke zugrunde, dass die Lateralgeschwindigkeit entweder aus einem optischen System gemessen wird oder über ein Ortungssystem wie das GPS oder Galileosystem erfasst wird und/oder mittels ESP-Sensorik, welche im Airbagsteuergerät zur Bestimmung der Lateralgeschwindigkeit herangezogen wird. Die dafür notwendigen Signale sind die Gierrate, also die Drehgeschwindigkeit um die Vertikalachse, die Längsgeschwindigkeit und/oder Raddrehzahl, Lenkwinkel und Lateralbeschleunigung. Optional kann der Lenkwinkel mitverwendet werden. Durch die Verknüpfung ergibt sich die Berechnung der Schwimmwinkeländerung, die durch Integration zum Schwimmwinkel führt. Mittels der Längsgeschwindigkeit kann dann die Lateralgeschwindigkeit bestimmt werden. Die Auslösung des Bügels oder der Rollover-Sticks kann in einfachster Form beim Überschreiten eines Schwellwerts des Schwimmwinkels erfolgen. Eine Umrechnung in die Lateralgeschwindigkeit muss nicht notwendigerweise gegeben sein. Da der Schwimmwinkel den Winkel zwischen Fahrzeuglängsachse und Schwerpunktsgeschwindigkeit bezeichnet, ist dieser ein Maß für die seitliche Bewegung des Fahrzeugs. Selbst bei geringer Geschwindigkeit kann somit der Überrollschutz aktiviert werden.

Weitere bevorzugte Ausführungsformen gehen aus den abhängigen Ansprüchen hervor.

Insbesondere ist es vorteilhaft, dass die Überrollschutzmittel reversible ausgebildet sind und dabei als Überrollbügel und/oder ausfahrbarer Kopfstütze und/oder Rollover-Stick ausgebildet sind.

Eine vorteilhafte Ausgestaltung der Erfindung sieht vor, dass die Überrollschutzmittel in Abhängigkeit von einer Schwellwertüberschreitung durch die Lateralgeschwindigkeit und einer Steigung der Lateralgeschwindigkeit angesteuert wird. Insbesondere wird dabei vorgesehen, dass die Dauer oder Häufigkeit der Schwellwertüberschreitung durch die Lateralgeschwindigkeit gemessen wird. Die beiden Ergebnisse, die Steigung und die Schwellwertüberschreitung, werden dann logisch miteinander verknüpft, um zu entscheiden, ob die Überrollschutzmittel angesteuert werden.

Darüber hinaus ist vorteilhaft, dass die Lateralgeschwindigkeit und/oder der Schwimmwinkel mittels einer optischen Messvorrichtung und/oder einer Ortungsvorrichtung und/oder Fahrdynamiksensorik ermittelt werden. Als Fahrdynamiksensorik, die vorzugsweise direkt im Airbagsteuergerät angeordnet ist, kommen die Gierrate, Raddrehzahlen, die Längsgeschwindigkeit, der Lenkwinkel und/oder die Lateralbeschleunigung in Frage.

Zeichnungen

Ausführungsbeispiele der Erfindung sind in der Zeichnung dargestellt und werden in der nachfolgenden Beschreibung näher erläutert.

Es zeigen:

Figur 1 eine erste Ausführungsform der Erfindung,

Figur 2 eine zweite Ausführungsform,

Figur 3 eine dritte Ausführungsform,

Figur 4 verschiedene Schwimmwinkel und

Figur 5 eine vierte Ausführungsform.

Beschreibung

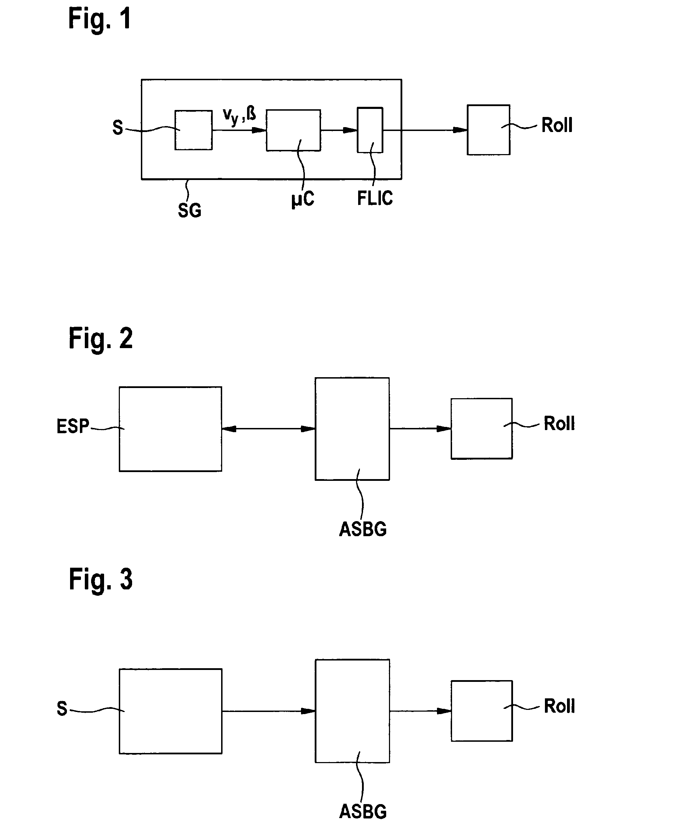

Figur 1 zeigt eine erste Ausführungsform der erfindungsgemäßen Vorrichtung. In einem Airbagsteuergerät SG ist eine Sensorik S vorhanden, die derart konfiguriert ist, dass sie die Lateralgeschwindigkeit $v_y$ und den Schwimmwinkel $\beta$ liefert. Diese Daten werden an einen Microcontroler $\mu$C übertragen, der aus der Lateralgeschwindigkeit und/oder dem Schwimmwinkel entscheidet, ob er über eine Zündkreisansteuerung FLIC reversible Überrollschutzmittel wie einen Überrollbügel oder Rollover-Sticks, hier durch Roll gekennzeichnet, ansteuert. Die Sensorik S ist hier eine Fahrdynamiksensorik, die die Gierrate, die Längsgeschwindigkeit und/oder Raddrehzahlen und/oder Lenkwinkel und/oder die Lateralbeschleunigung liefert. Dazu sind dort Drehratensensoren, Beschleunigungssensoren und Verbindungen zu den Rädern und der Lenkung sowie eine Verbindung zur CAN-Matrix vorhanden, um die Eigengeschwindigkeit zu erfassen.

Figur 2 zeigt eine Alternative. Nunmehr ist das Steuergerät ESP für die Fahrdynamikregelung mit dem Airbagsteuergerät ABSG verbunden. Das Steuergerät ESP liefert die Lateralgeschwindigkeit und/oder den Schwimmwinkel an das Airbagsteuergerät, das in Abhängigkeit von diesen Größen die Überrollschutzmittel Roll ansteuert.

Figur 3 zeigt eine weitere Alternative. Die Sensorik ist nun vollständig ausgelagert und liefert die Daten der Lateralgeschwindigkeit und des Schwimmwinkels an das Airbagsteuergerät ABSG. In Abhängigkeit von diesen Daten wiederum entscheidet das Airbagsteuergerät ABSG, ob es die Überrollschutzmittel Roll ansteuert. Bei der ausgelagerten Sensorik kann es sich um eine Sensorbox für die Sensorenerfassung der Raddrehzahlen und des Lenkwinkels handeln. Auch eine optische Sensorik zur Erfassung des Schwimmwinkels bzw. der Lateralgeschwindigkeit ist hier möglich. Weiterhin ist es möglich, dass mittels einer Ortungsvorrichtung die Lateralgeschwindigkeit bzw. der Schwimmwinkel bestimmt wird. Eine solche Ortungsvorrichtung ist vorzugsweise GPS (Global Positioning System) oder das europäische System GALILEO. Aus den Daten dieser Ortungssysteme kann beispielsweise über eine differenzielle Betrachtungsweise eine Veränderung des Fahrzeugs auch auf kleinem Raum erfasst werden und somit Bewegungsgrößen wie die Lateralgeschwindigkeit oder der Schwimmwinkel bestimmt werden. Auch andere Ortungssysteme sind hier, sofern sie geeignet sind die Lateralgeschwindigkeit und/oder den Schwimmwinkel zu bestimmen, anwendbar. Kombinationen aus den Vorrichtungen gemäß den Figuren 1-3 sind möglich.

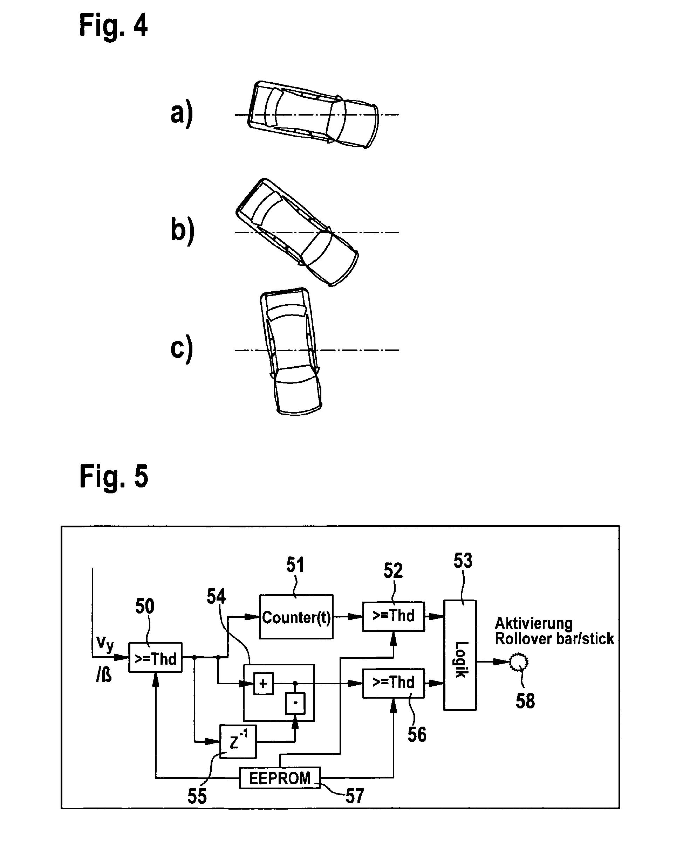

Figur 4 zeigt in A, B und C das Fahrzeug unter verschiedenen Schwimmwinkeln. Situation A bezeichnet einen Schwimmwinkel von ungefähr 0°, Situation B von 45° und Situation C von 90°. Zur Bestimmung des Schwimmwinkels ist folgende Gleichung verwendbar:

$$\dot{\beta} = \omega_z - \frac{a_y \cdot \cos^2(\beta)}{v_x} + \frac{a_x \cdot \sin(\beta) \cdot \cos(\beta)}{v_x}$$

Bei einem Winkel von ungefähr 0° reduziert sich diese Gleichung zu:

$$\dot{\beta} \approx \omega_z - \frac{a_y}{v_x}$$

Dies liegt daran, dass der Sinus eines Winkels nahe 0° ebenfalls ungefähr 0 ist und der Cosinus nahe 0° ungefähr 1 ist. Bei einem Winkel von ungefähr 45° ist die Gleichung 1 hier nun als Gleichung 3 bezeichnet, zu übernehmen.

$$\dot{\beta} = \omega_z - \frac{a_y \cdot \cos^2(\beta)}{v_x} + \frac{a_x \cdot \sin(\beta) \cdot \cos(\beta)}{v_x}$$

Bei einem Winkel von ungefähr 90° für den Schwimmwinkel reduziert sich die Gleichung zu

$$\dot{\beta} \approx \omega_z$$

Dies liegt daran, dass der Cosinus für einen Winkel von 90° ungefähr 0 ergibt, sodass lediglich der erste Term der Gleichung 1 übrig bleibt. Diese Gleichung zur Bestimmung der Änderung des Schwimmwinkels müssen zur Bestimmung des Schwimmwinkels letztlich integriert werden.

Daraus folgt

$$\beta = \beta_0 + \int\beta\, dt,$$

wobei $\beta_0$ einen Anfangswinkel bezeichnet, der auch 0 oder als Parameter ausgeprägt sein kann. Die Lateralgeschwindigkeit ergibt sich damit aus

$$v_y = v_x \tan(\beta).$$

Eine Ausführungsform der Erfindung ist in Figur 5 dargestellt. Dort ist einem Blockschaltbild zu entnehmen, wie aus der Lateralgeschwindigkeit und/oder dem Schwimmwinkel über verschiedene Verarbeitungsschritte bestimmt wird, ob Überrollschutzmittel eingesetzt werden sollen oder nicht. Dabei kann die Bestimmung innerhalb eines ESP oder Fahrdynamiksteuergerätes erfolgen oder die Bestimmung wird im Airbagsteuergerät oder einem weitern unabhängigen Steuergerät durchgeführt. Die Aktivierung des Überrollbügels und/oder der ausfahrbaren Kopfstützen erfolgt somit rein auf Basis der Lateralgeschwindigkeit und/oder des Schwimmwinkels. Die Schwellwerte sind dabei beliebig einstellbare Parameter innerhalb des Steuergeräts. Zunächst wird im Block 50 ein Schwellwertvergleich beispielsweise für die Lateralgeschwindigkeit $v_y$ durchgeführt. Damit soll verhindert werden, dass bei einem geringsten Ausbrechen bereits eine Fehlaktivierung stattfindet. Überschreitet die Lateralgeschwindigkeit diesen ersten Schwellwert, wird in Block 51 gezählt, wie häufig dieses Ereignis eingetreten ist oder wie lange dieses Ereignis eingetreten ist. Diese Dauer aus dem Block 51 wird im Block 52 mit einem weiteren Schwellwert verglichen und erst wenn dieser Schwellwert überschritten wurde, kommt eine logische 1 an einen Logikbaustein 53, beispielsweise einen UND-Gatter an, dessen Ausgang dann das Feuersignal für die Überrollschutzmittel steht. Parallel zu dem Zählen des Überschreitens dieses allerersten Schwellwerts wird geprüft, ob es sich bei der Lateralgeschwindigkeit um eine steigende Lateralgeschwindigkeit handelt. Dazu wird im Block 54 die Lateralgeschwindigkeit mit der Zeit der verzögerten Lateralgeschwindigkeit subtrahiert. Dieses Ergebnis wird dann im Block 56 einem Schwellwertvergleich unterzogen. Um die verzögerte Lateralgeschwindigkeit herzustellen, wird ein Verzögerungsglied 55 eingeführt. Handelt es sich um eine steigende Lateralgeschwindigkeit muss ein positiver Wert aus der Subtraktion aus dem Block 54 hervorkommen, wobei dann beispielsweise der Schwellwert auch 0 sein kann. Die Schwellwerte werden aus einem EEPROM 57 in die Schwellwertentscheider 52 und 56 geladen. Zeigen beide Schwellwertentscheider 52 und 56 an, dass der erste Schwellwert aus dem Block 50 lange genug überschritten wurde und es sich um eine steigende Lateralgeschwindigkeit handelt, dann entscheidet die Logik 53, dass die Überrollschutzmittel 58 aktiviert werden sollen.

Alternativ ist es möglich, dass dies auch nur für den Schwimmwinkel erfolgt oder für beide Größen. Eine weitere Ausführung könnte so aussehen, dass zusätzlich, wenn der Algorithmus in einem Airbagsteuergerät abläuft, die Lateralbeschleunigung über einen einfachen Schwellwert verglichen wird, wobei dies anzeigt, dass das Fahrzeug verzögert unterwegs ist. Selbe Information ist in einem ESP-System verfügbar, sodass bei Implementierung in ein ESP-Steuergerät dieselbe Funktionalität realisierbar ist. Andere algorithmische Kombinationen von Schwimmwinkel und fahrdynamischen Größen sind ebenfalls denkbar, wie beispielsweise die Gierrate.

Die Realisierung gemäß Fig. 5 kann als Software und/oder als Hardware realisiert sein.

**Patentansprüche**

1. Vorrichtung zur Ansteuerung von Überrollschutzmitteln (Roll, 58) in einem Fahrzeug mit:

   - einer Sensorik (S, ESP) zur Bestimmung einer Lateralgeschwindigkeit ($v_y$) und/oder eines Schwimmwinkels ($\beta$), **gekennzeichnet durch** eine Auswerteschaltung ($\mu C$), die rein auf Basis von der Laterälgeschwindigkeit ($v_y$) und/oder des Schwimmwinkels ($\beta$) die Überrollschutzmittel (Roll, 58) ansteuert, ohne eine vorhandene Crashsensorik zu verwenden.

2. Vorrichtung nach Anspruch 1, **dadurch gekennzeichnet, dass** die Überrollschutzmittel (Roll, 58) reversibel ausgebildet sind.

3. Vorrichtung nach Anspruch 2, **dadurch gekennzeichnet, dass** die Überrollschutzmittel (Roll, 58) wenigstens einen Überrollbügel und/oder wenigstens eine ausfahrbare Kopfstütze und/oder wenigstens einen Rollover-Stick aufweisen.

**4.** Vorrichtung nach einem der vorhergehenden Ansprüche, **dadurch gekennzeichnet, dass** die Auswerteschalter ($\mu$C) die Überrollschutzmittel (Roll, 58) in Abhängigkeit von einer Schwellwertüberschreitung durch die Lateralgeschwindigkeit ($v_y$) und einer Steigung der Lateralgeschwindigkeit ($v_y$) ansteuern.

**5.** Vorrichtung nach einem der vorhergehenden Ansprüche, **dadurch gekennzeichnet, dass** die Vorrichtung die Lateralgeschwindigkeit und/oder den Schwimmwinkel ($\beta$) mittels einer optischen Messvorrichtung und/oder einer Ortungsvorrichtung und/oder einer Fahrdynamiksensorik (ESP) bestimmt.

**Claims**

**1.** Device for actuating rollover protection means (roll, 58) in a vehicle, having:

- a sensor system (S, ESP) for determining a lateral velocity ($v_y$) and/or an attitude angle ($\beta$),

**characterized by** an evaluation circuit ($\mu$C) which actuates the rollover protection means (roll, 58) purely on the basis of the lateral velocity ($v_y$) and/or the attitude angle ($\beta$) without using a crash sensor system which is present.

**2.** Device according to Claim 1, **characterized in that** the rollover protection means (roll, 58) are of reversible design.

**3.** Device according to Claim 2, **characterized in that** the rollover protection means (roll, 58) has at least one rollover bar and/or at least one extendable headrest and/or at least one rollover stick.

**4.** Device according to one of the preceding claims, **characterized in that** the evaluation switches ($\mu$C) actuate the rollover protection means (roll, 58) as a function of a threshold value being exceeded by the lateral velocity ($v_y$) and a gradient of the lateral velocity ($v_y$).

**5.** Device according to one of the preceding claims, **characterized in that** the device determines the lateral velocity and/or the attitude angle ($\beta$) by means of an optical measuring device and/or a locating device and/or a vehicle dynamics sensor system (ESP).

**Revendications**

**1.** Dispositif de commande de moyens (Roll, 58) de protection contre les tonneaux d'un véhicule, lequel dispositif présente :

un ensemble de détecteurs (S, ESP) qui détermine la vitesse latérale ($v_y$) et/ou l'angle ($\beta$) de glissement latéral,

**caractérisé par**
un circuit d'évaluation ($\mu$C) qui commande les moyens (Roll, 58) de protection contre les tonneaux uniquement sur base de la vitesse latérale ($v_y$) et/ou de l'angle ($\beta$) de glissement latéral sans utiliser un ensemble présent de détecteurs de collision.

**2.** Dispositif selon la revendication 1, **caractérisé en ce que** les moyens (Roll, 58) de protection contre les tonneaux sont réversibles.

**3.** Dispositif selon la revendication 2, **caractérisé en ce que** les moyens (Roll, 58) de protection contre les tonneaux présentent au moins un étrier de protection contre les tonneaux et/ou au moins un appui-tête déployable et/ou au moins un barreau de redressement.

**4.** Dispositif selon l'une des revendications précédentes, **caractérisé en ce que** les commutateurs d'évaluation ($\mu$C) commandent les moyens (Roll, 58) de protection contre les tonneaux en fonction du dépassement d'une valeur de seuil de la vitesse latérale ($v_y$) et du gradient de vitesse latérale ($v_y$).

**5.** Dispositif selon l'une des revendications précédentes, **caractérisé en ce que** le dispositif détermine la vitesse latérale et/ou l'angle ($\beta$) de glissement latéral au moyen d'un dispositif de mesure optique et/ou d'un dispositif de localisation et/ou d'un ensemble (ESP) de détecteurs de dynamique du roulage.

**Fig. 1**

**Fig. 2**

**Fig. 3**

# Fig. 4

a)

b)

c)

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10250732 B3
- US 20040183281 A1
- US 20050017487 A1
- DE 102004007800
- WO 03031236 A1